# EUROPÄISCHE PATENTANMELDUNG

(11) **EP 1 253 066 A1**
(43) Veröffentlichungstag der Anmeldung: **30.10.2002**
(21) Anmeldenummer: 02006145.3
(22) Anmeldetag: 19.03.2002
(51) Int. Cl.: B62D 21/11

(54) **Fahrwerks- oder Karossereibauteil**

(30) Priorität: 27.04.2001 DE 10120934
(71) Anmelder: Benteler Automobiltechnik GmbH & Co. KG, 33104 Paderborn (DE)
(72) Erfinder: Henksmeier, Thomas, 59556 Lippstadt (DE); Theissing, Christian, 48496 Halverde (DE)
(74) Vertreter: Ksoll, Peter, Dr.-Ing.

(57) **Zusammenfassung**

Die Erfindung betrifft ein Fahrwerks- oder Karosseriebauteil, insbesondere einen Achsträger, welches aus wenigstens zwei Bauteilkomponenten A, B bzw. C aus Stahl zusammengesetzt ist. Die Bauteilkomponenten A, B, C besitzen voneinander verschiedene Bauteilfestigkeiten, wobei eine 1. Bauteilkomponente A warmvergütet und die 2. Bauteilkomponente B, C unvergütet ist. Die warmvergütete 1. Bauteilkomponente A besitzt eine Streckgrenze Rₑ um 900 MPa. Die einzelnen Bauteilkomponenten A, B, C können selbst aus mehreren Einzelbauteilen zusammengesetzt sein. Zweckmäßigerweise sind die Bauteilkomponenten A, B, C ebenso wie die Einzelbauteile durch Schweißen gefügt.

## Beschreibung

Die Erfindung betrifft ein Fahrwerks- oder Karosseriebauteil für ein Kraftfahrzeug.

Fahrwerks- und Karosseriebauteile, wie Vorder- oder Hinterachsträger ebenso wie Türaufprallträger, Stoßfänger, Längsträger oder Karosseriesäulen unterliegen im Betrieb hohen statischen und dynamischen Belastungen. Überwiegend werden derzeit bei der Herstellung solcher Bauteile unlegierte oder niedrig liegierte Stähle verwendet. Diese stellen einen Kompromiss zwischen der Umformbarkeit und der Streckgrenze des Werkstoffs dar, weil mit steigender Streckgrenze im allgemeinen die Umformbarkeit des Werkstoffs sinkt und die nach einer Kaltumformung verbleibende Restbruchdehnung verringert wird. Höherfeste Stählen können oftmals nur durch Warmumformung zu Fahrwerks- oder Karosseriebauteilen verarbeitet werden.

Die verschiedenen Fahrwerks- bzw. Karosseriebauteile werden teilweise überdimensioniert, weil die Wanddicke der Bauteile nach der höchsten Belastung ausgelegt wird, obwohl in niedriger belasteten Bereichen diese maximale Wanddicke gar nicht benötigt würde. Aus diesen Gründen werden auch sogenannte Tailored Blanks verbaut. Hierbei handelt es sich um zusammengeschweißte Blechplatinen unterschiedlicher Festigkeitseigenschaften und/oder unterschiedlicher Blechdicke. Die hieraus gefertigten Karosserie- oder Fahrwerksbauteile sind dann in unterschiedlichen Bauteilzonen hinsichtlich ihrer Dicke auf die im Fahrbetrieb auftretenden Belastungen bzw. Spannungen unter Einhaltung notwendiger Sicherheitsfaktoren abgestimmt.

Die Herstellung der Tailored Blanks ist jedoch aufwendig. Auch ist deren weitere Umformung wegen der Blechdickensprünge nicht unproblematisch. Grundsätzlich muss aber herausgestellt werden, dass diese Technik innovativ ist.

Der Erfindung liegt ausgehend vom Stand der Technik die Aufgabe zugrunde, Fahrwerks- oder Karosseriebauteile für ihren betrieblichen Einsatz zu verbessern und die Abstimmung auf die in verschiedenen Bauteilzonen auftretenden Belastungen effizienter zu gestalten.

Die Lösung dieser Aufgabe besteht in einem Karosserie- oder Fahrwerksbauteil gemäß den Merkmalen von Anspruch 1.

Danach ist ein erfindungsgemäßes Karosserie- bzw. Fahrwerksbauteil aus mehreren Bauteilkomponenten zusammengesetzt, die auf die im Betrieb auftretenden bzw. zu erwartenden Belastungen abgestimmte voneinander verschiedene Bauteilfestigkeiten besitzen, wobei die in hoch belasteten Bereichen platzierten Bauteilkomponenten warmvergütet sind.

Vorteilhafte Ausgestaltungen und Weiterbildungen des grundsätzlichen Erfindungsgedankens bilden Gegenstand der abhängigen Ansprüche 2 bis 6.

Die Bauteilkomponenten werden voneinander unabhängig separat gefertigt und auf die geforderten Bauteilfestigkeiten eingestellt. Hierzu werden die ersten Bauteilkomponenten warmvergütet. Zweckmäßigerweise erfolgt die Erwärmung in einem Durchlaufofen mit anschließendem Abschreckvorgang. Die miteinander kombinierten Bauteilkomponenten können unterschiedlich hoch vergütet sein. Für die Praxis bietet sich die Kombination von warmvergüteten Bauteilkomponenten und unvergüteten Bauteilkomponenten an.

Vorzugsweise besitzen die ersten warmvergüteten Bauteilkomponenten eine Streckgrenze Rₑ zwischen 850 MPa und 950 MPa. Es kommen dann höchstfeste Bauteilkomponenten in kritischen Belastungszonen zum Einsatz, die mit den übrigen Bauteilkomponenten zu einer kompletten Baugruppe zusammengesetzt und gefügt werden. Die Bauteilkomponenten für die geringer belasteten Bauteilzonen können aus normalem Qualitäts- bzw. Baustahl bestehen. Insgesamt wirkt sich die Erfindung positiv auf das gesamte Bauteilgewicht aus, ebenso wie auf die Bauteilkosten sowohl was den Materialeinsatz anbelangt als auch die Fertigungskosten.

Die erste warmvergütete Bauteilkomponente kann aus zwei oder mehr einzelnen Bauteilen zusammengesetzt sein, die dann als Einheit vergütet werden. Somit werden kleinere Einheiten vergütet. Es ist nicht erforderlich, das komplette Fahrwerks- bzw. Karosseriebauteil zu vergüten. Dies erspart Investitions- und Betriebskosten für große Vergütungsanlagen. Zudem wird ein Wärmeverzug am fertigen Fahrwerks bzw. Karosseriebauteil vermieden.

Die erfindungsgemäßen Fahrwerks-/Karosseriebauteile zeichnen sich zudem durch ihr gutes dynamoelastisches Verhalten aus, da nur die Bauteilkomponenten in stark belasteten, also kritischen Zonen vergütet sind und die geforderte Festigkeit aufweisen. Die übrigen Bauteilkomponenten sind demgegenüber weicher und damit elastischer im Schwingungsverhalten.

Die einzelnen Bauteilkomponenten sind miteinander fügetechnisch verbunden. Da es sich um Stahlbauteile handelt bietet sich eine schweißtechnische Fügung an. Grundsätzlich können im Rahmen der Erfindung aber andere kraft- und/oder formschlüssige Fügetechniken, wie Kleben oder Schrumpfen, zur Anwendung gelangen.

Eine vorteilhafte Ausführungsform sieht vor, dass die erste Bauteilkomponente und die zweite Bauteilkomponente in ihrem Verbindungsbereich überlappend ineinander gesteckt und gefügt sind. Auch diese Fügung erfolgt zweckmäßigerweise mittels Verschweißung.

Im Rahmen der Erfindung wird eine gezielte Erhöhung der Festigkeit in hochbelasteten Bereichen an einem Fahrwerks- oder Karosseriebauteil vorgenommen. Hierdurch wird die Flexibilität bei der Bauteilauslegung beispielsweise eines Achsträgers erhöht. Zudem kann das Crashverhalten verbessert werden. Als Folge einer möglichen kompakteren Bauweise kann das zur Verfügung stehende Bauvolumen besser ausgenutzt werden. Eine Gewichts- und Kostenreduzierung wird erzielt durch eine mögliche Wandstärkenverringerung in weniger belasteten Bauteilzonen. Zur Kostenreduzierung trägt auch bei, dass einzelne Bauteilkomponenten aus kostengünstigen unvergüteten Stählen bestehen können. Fertigungstechnisch kommen bewährte Standardtechnologien (Vergüten, Härten, Umformen etc.) zum Einsatz, so dass auch eine hohe Prozesssicherheit gewährleistet ist.

Beispiele für erfindungsgemäß ausgestaltete Fahrwerks- oder Karosseriebauteile sind Vorder- oder Hinterachsträger, Mehrlenker- bzw. Verbundlenkerachsen, Tür- und Seitenaufprallträger, Stoßfänger, Karosserielängsträger sowie A-, B-, C- oder D-Säulen.

Die Erfindung ist nachfolgend anhand eines in den Zeichnungen dargestellten Ausführungsbeispiels näher beschrieben. Es zeigen:
- Figur 1: In perspektivischer Darstellungsweise eine Vorderachse und
- Figur 2: den Ausschnitt eines Knotenpunkts der Vorderachse in vergrößerter Darstellungsweise.

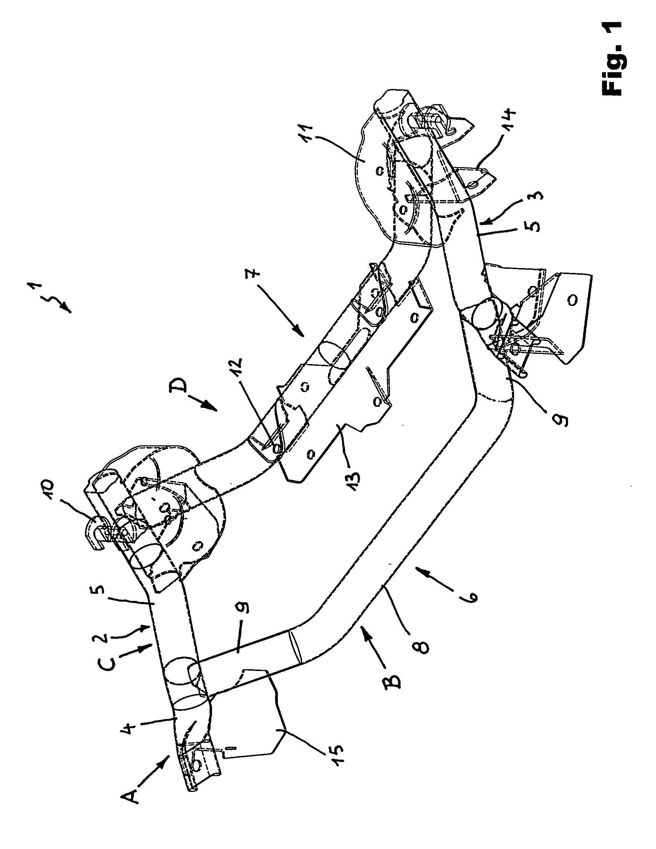

Die Figur 1 zeigt den Achsträger 1 einer Vorderachse. Der Achsträger 1 ist eine Rohrrahmenkonstruktion und besteht im wesentlichen aus einem linken und rechten Seitenträger 2, 3, die jeweils aus einem vorderen Seitenrohr 4 und einem hinteren Seitenrohr 5 zusammengesetzt sind, sowie einem vorderen Querträger 6 und einem hinteren Querträger 7. Der vordere Querträger 6 besteht aus einem mittleren Querrohr 8, an das jeweils seitlich ein äußeres Querrohr 9 angesetzt ist.

Am Achsträger 1 sind diverse Anbauteile festgelegt. Mit 10 ist die Karosserieanbindung hinten und mit 11 die Motorlagerkonsole bezeichnet. Ferner ist dargestellt ein Halter 12 für das Lenkgetriebe und ein Multifunktionsblech 13 am Mittelabschnitt des hinteren Querträgers 7. Ein hinterer Querlenkerhalter ist mit 14 bezeichnet.

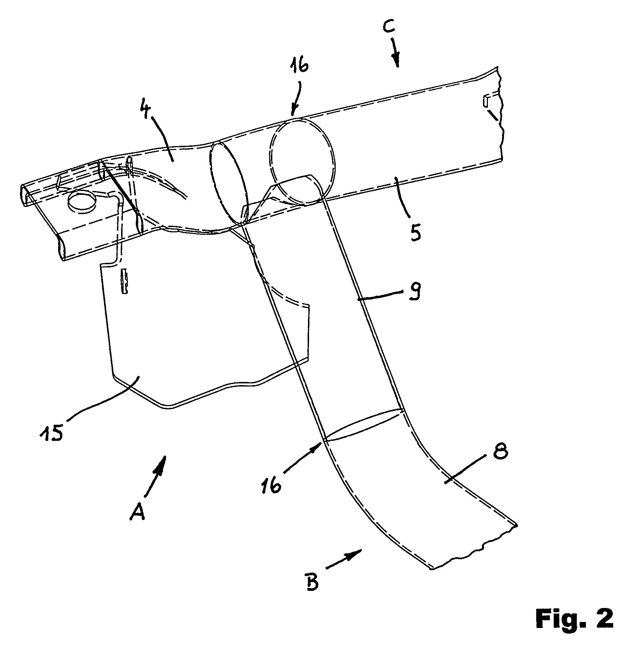

Der Achsträger ist aus mehreren vorkonfektionierten Bauteilkomponenten A, B, C, D zusammengesetzt. Der vordere Knotenpunkt (Bauteilkomponente A) des Achsträgers 1, wie er in der Figur 2 vergrößert dargestellt ist, umfasst das vordere Seitenrohr 4, das äußere Querrohr 9 vorne und einen vorderen Querlenkerhalter 15. Der Querlenkerhalter 15 ist eine Blechkonstruktion. Die Einzelbauteile, also Seitenrohr 4, äußeres Querrohr 9 vorne und Querlenkerhalter 15 sind aus einem vergütbaren Stahl gefertigt und miteinander verschweißt worden. Anschließend wird diese erste Bauteilkomponente A warmvergütet. Hierzu erfolgt eine Erwärmung in einem Durchlaufofen, worauf die Bauteilkomponente A abgeschreckt und gehärtet wird. Die Erwärmung kann selbstverständlich auch induktiv erfolgen mit anschließender Abschreckung beispielsweise mittels einer Wasserbrause.

Die so warmvergüteten Bauteilkomponenten A werden dann mit zweiten unvergüteten Bauteilkomponenten B bzw. C verbunden. Die Bauteilkomponente B umfasst das mittlere Querrohr 8 vorne. Die Bauteilkomponenten C entsprechen den hinteren Seitenrohren 5. Bauteilkomponente D umfasst den hinteren Querträger 7 mit den angegliederten Einzelbauteilen. In die zu verbindenden Abschnitte der 1. Bauteilkomponente A und der 2. Bauteilkomponente B bzw. C sind konfigurativ aufeinander abgestimmt, so dass die Bauteile im Verbindungsbereich 16 überlappend ineinandergesteckt und verschweißt werden können. Grundsätzlich ist auch eine Stumpfverschweißung der Bauteilkomponenten A, B, C möglich.

Im Achsträger 1 sind höchstfeste Bauteilkomponenten A, die eine Streckgrenze im Bereich um 900 MPa aufweisen mit den übrigen Bauteilkomponenten B, C, D kombiniert, wobei diese aus normalem Qualitäts- bzw. Baustahl bestehen können.

### Bezugszeichenaufstellung

- 1 -: Achsträger
- 2 -: Seitenträger
- 3 -: Seitenträger
- 4 -: vorderes Seitenrohr
- 5 -: hinteres Seitenrohr
- 6 -: vorderer Querträger
- 7 -: hinterer Querträger
- 8 -: mittleres Querrohr v. 6
- 9 -: äußeres Querrohr v. 6
- 10 -: Karosserieanbindung hinten
- 11 -: Motorlagerkonsole
- 12 -: Halter Lenkgetriebe
- 13 -: Multifunktionsblech
- 14 -: hinterer Querlenkerhalter
- 15 -: vorderer Querlenkerhalter
- 16 -: Verbindungsbereich

- A -: Bauteilkomponente
- B -: Bauteilkomponente
- C -: Bauteilkomponente
- D -: Bauteilkomponente

## Patentansprüche

1. Fahrwerks- oder Karosseriebauteil, insbesondere Achsträger, welches aus wenigstens zwei Bauteilkomponenten (A, B, C, D) aus Stahl zusammengesetzt ist, **dadurch gekennzeichnet, dass** die Bauteilkomponenten (A, B, C, D) voneinander verschiedene Bauteilfestigkeiten besitzen und eine 1. Bauteilkomponente (A) warmvergütet ist.

2. Fahrwerks- oder Karosseriebauteil nach Anspruch 1, **dadurch gekennzeichnet, dass** die 1. Bauteilkomponente (A) warmvergütet und die andere 2. Bauteilkomponente (B, C, D) unvergütet ist.

3. Fahrwerks- oder Karosseriebauteil nach Anspruch 1 oder 2, **dadurch gekennzeichnet, dass** die warmvergütete 1. Bauteilkomponente (A) eine Streckgrenze Rₑ zwischen 850 MPa und 950 MPa besitzt.

4. Fahrwerks- oder Karosseriebauteil nach einem der Ansprüche 1 bis 3, **dadurch gekennzeichnet, dass** die 1. Bauteilkomponente (A) aus zwei oder mehr Einzelbauteilen (4, 9, 15) zusammengesetzt ist.

5. Fahrwerks- oder Karosseriebauteil nach einem der Ansprüche 1 bis 4, **dadurch gekennzeichnet, dass** die Bauteilkomponenten (A, B, C, D) fügetechnisch, insbesondere schweißtechnisch, miteinander verbunden sind.

6. Fahrwerks- oder Karosseriebauteil nach einem der Ansprüche 1 bis 5, **dadurch gekennzeichnet, dass** die 1. Bauteilkomponente (A) und die 2. Bauteilkomponente (B, C) im Verbindungsbereich (16) ineinander gesteckt und gefügt sind.
